# EUROPÄISCHE PATENTSCHRIFT

(11) **EP 2 220 981 B1**
(45) Veröffentlichungstag und Bekanntmachung des Hinweises auf die Patenterteilung: **26.12.2018**
(21) Anmeldenummer: 10151283.8
(22) Anmeldetag: 21.01.2010
(51) Int. Cl.: A47J 43/08, A47J 43/07, A47J 27/00

(54) **Elektromotorisch betriebene Küchenmaschine**
Kitchen appliance operated by electric motor
Appareil ménager fonctionnant avec un moteur électrique

(30) Priorität: 24.01.2009 DE 102009006041
(43) Veröffentlichungstag der Anmeldung: 25.08.2010
(73) Patentinhaber: Vorwerk & Co. Interholding GmbH, 42275 Wuppertal (DE)
(72) Erfinder: Arnold, Hans-Peter, 58566 Kierspe (DE); Degen-Braun, Barbara, 42327 Wuppertal (DE)
(74) Vertreter: Müller, Enno

(56) Entgegenhaltungen:
- EP-A1- 1 702 545
- BE-A- 658 914
- DE-A1- 1 525 388
- DE-A1- 2 135 589
- DE-A1- 2 733 880

## Beschreibung

Die Erfindung betrifft eine elektromotorisch betriebene Küchenmaschine mit einem Rührtopf und einem darin angeordneten, eine Abtriebswelle aufweisenden Rührwerk, wobei die Abtriebswelle im Zuge des Einsetzens des Rührtopfes mit einer, einer Rührtopfaufnahme zugeordneten Antriebswelle kuppelt, wobei die Kupplung durch eine im Querschnitt unrunde Ausbildung der zugeordneten Abschnitte der An- und Abtriebswelle gebildet ist.

Küchenmaschinen der in Rede stehenden Art sind bekannt. Diese weisen einen von der Küchenmaschine, weiter insbesondere von einer Aufnahme abnehmbaren Rührtopf auf, in welchem ein um eine im Betrieb vertikal ausgerichtete Achse drehbares Rührwerk angeordnet ist. Dieses dient bspw. der Vermengung, weiter bspw. je nach Auslegung des Rührwerkes zur Zerkleinerung des in dem Rührtopf aufgenommenen Rührgutes. Das Rührwerk wird über einen maschinenseitigen Elektromotor angetrieben, wozu an der Schnittstelle zwischen Rührtopf und geräteseitiger Aufnahme eine Kupplung vorgesehen ist. Zur drehmitnehmenden Kupplung der maschinenseitigen Antriebswelle mit der rührtopfseitigen Abtriebswelle sind die entsprechenden Kupplungsabschnitte der Wellen im Querschnitt unrund ausgebildet, weiter bspw. einen sternförmigen Querschnitt aufweisend, wodurch zumindest im Rührbetrieb eine Formschlussmitnahme erreicht ist.

Aus der BE 658914 A ist eine Küchenmaschine bekannt, bei welcher ein die Abtriebswelle bildendes Kupplungszahnrad aus Gummi besteht. Die Antriebszahnrad besteht aus einem Hartwerkstoff wie bspw. Hartkunststoff.

Aus der EP 1 702 545 A1 ist zur Erleichterung des Ineinandersetzens der Kupplungsteile bei einer solchen Küchenmaschine vorgesehen, dass das Einsetzteil eine gewisse Nachgiebigkeit aufweist.

Ausgehend von dem zuletzt genannten Stand der Technik beschäftigt sich die Erfindung mit der Aufgabenstellung, eine Küchenmaschine der in Rede stehenden Art hinsichtlich der Kupplungsausgestaltung vorteilhaft auszubilden.

Diese Aufgabe ist beim Gegenstand des Anspruches 1 gelöst, wobei darauf abgestellt ist, dass die An- und/oder Abtriebswelle im Kupplungsbereich eine in Umfangsrichtung mindestens zweistufig wirkende Dämpfungseinrichtung aufweist, wobei die zweite, nach Überschreiten eines bestimmten Drehmoments in Wirkung kommende Stufe steifer ausgelegt ist als die vorgeschaltete erste Stufe, und dass die erste Stufe durch Anordnung einer Weichzone gebildet ist und dass die zweite Stufe durch unmittelbare Anlage von miteinander wirkenden Strukturabschnitten der An- und Abtriebswelle gebildet ist, wobei die erste Stufe durch ein Überlaufen der ersten Stufe durch unmittelbares hartes Anlegen der Kupplungspartner aneinander nicht maximal belastet ist. Zufolge dieser Ausgestaltung ist ein möglicher Mittenversatz der Achsen von An- und Abtriebswelle durch ein differenziert wirkendes Dämpfungselement ausgeglichen, welches in einer ersten Stufe auf einen Betriebszustand mit geringer Last ausgelegt ist, die zufolge der steifer ausgelegten zweiten Stufe bei hohen Betriebslasten keiner Schädigung ausgesetzt ist. Entsprechend wird zufolge der mindestens zweistufig wirkenden Dämpfungseinrichtung in selbstorganisierender Art und Weise die Dämpfungshärte in der Kupplungsmitnahme dem jeweiligen Lastzustand angepasst.

Die erste Stufe der Dämpfungseinrichtung ist in der steifer ausgelegten, d.h. eine geringere Elastizität als die erste Stufe aufweisenden zweiten Stufe nicht bzw. nicht materialschädigend beansprucht.

Zudem ist die vorgeschlagene Dämpfungseinrichtung bevorzugt so ausgelegt, dass nur Kräfte in Umfangsrichtung übertragen werden. Dementsprechend ist eine allein radial wirkende Dämpfungseinrichtung vorgeschlagen, die in Wirkung tritt zufolge einer Relativverlagerbarkeit der Wellen in Umfangsrichtung um ihre Wellenachsen. Zudem ist durch die Anordnung der radial wirkenden bzw. in Umfangsrichtung wirkenden Dämpfungseinrichtung ein ggf. verbleibender Restmittenversatz, d.h. ein Restversatz der Wellenachsen zueinander ausgeglichen.

Die Dämpfungseinrichtung ist in einer Ausgestaltung unlösbar mit der An- oder Abtriebswelle befestigt, bspw. durch Herstellung der jeweiligen Welle im Zweikomponentenverfahren, wobei weiter bei der einteiligen Ausgestaltung die erste Stufe der Dämpfungseinrichtung gegenüber der zweiten Stufe weicher, weiter elastischer eingestellt ist. So ist weiter bevorzugt die erste Stufe durch Anordnung einer Weichzone gebildet, während die zweite Stufe durch Strukturabschnitte der Welle selbst gebildet ist. Die Weichkomponente besteht hierbei weiter bspw. aus einem Gummimaterial oder einem Weichkunststoff wie TPE. Auch die zweite Stufe bzw. jede weitere Stufe der Dämpfungseinrichtung kann aus einem derartigen elastischen Material bestehen, wobei jedoch die Dämpfungseigenschaften, weiter die Elastizität dieser weiteren Stufen stets gegenüber der vorgeschalteten Stufe härter eingestellt ist.

In einer weiter bevorzugten Ausgestaltung ist zumindest die erste Stufe der Dämpfungseinrichtung durch ein von der An- oder Abtriebswelle lösbares Dämpfungsteil gebildet. Weiter bevorzugt ist dieses Dämpfungsteil werkzeuglos von der Welle lösbar, so weiter durch den Benutzer der Küchenmaschine. Beispielsweise kann hierzu das Dämpfungsteil an der Welle klemmgehaltert sein.

So ist in einer Weiterbildung des Erfindungsgegenstandes vorgesehen, dass das Dämpfungsteil in eine Fläche der An- oder Abtriebswelle einsetzbar ist. Diese Fläche zur Aufnahme bzw. Anordnung des Dämpfungsteils ist in weiter bevorzugter Ausgestaltung ein Strukturabschnitt der Welle, weiter bevorzugt eine Fläche, die in einer parallel zur Wellenachse verlaufenden Ebene bzw. in einer an dem Achsverlauf orientierten Ebene ausgebildet ist, weiter eine Fläche, die in Zuordnungsstellung zu einer Gegenfläche der anderen Welle steht. Entsprechend wirkt das in die Fläche eingesetzte Dämpfungsteil allein in Radialrichtung, so weiter bspw. bei einer Ausbildung des Dämpfungsteils als abgefederter Stößel oder bspw. in Form eines elastomeren, über die Strukturfläche radial hinausragenden Elements.

In diesem Zusammenhang ist weiter bevorzugt, dass das Dämpfungsteil die An- oder Abtriebswelle ringartig umgibt oder ausfüllt, weiter bevorzugt derart, dass über das Dämpfungsteil die erste - ggf. in sich weiter unterteilte - Stufe der Dämpfungseinrichtung erreicht ist, während die zweite, steifer ausgelegte Stufe durch die Struktur der Welle selbst geformt ist. Die ringartige Anordnung des Dämpfungsteils ist bspw. bei Ausgestaltung des Dämpfungsteils aus einem Elastomermaterial durch Anspritzen desselben an die Welle, weiter alternativ bei einer Welle aus einem Kunststoffmaterial durch Herstellung im ZweiKomponenten-Spritzverfahren erreichbar. Das Dämpfungsteil kann in diesem Zusammenhang weiter so angeordnet sein, dass in Umfangsrichtung der Welle betrachtet Bereiche zwischen den die zweite Stufe ausformenden Strukturabschnitten ausgefüllt sind, zur Ausbildung der ersten Dämpfungsstufe. Weiter bevorzugt ist das Dämpfungsteil lediglich in einem axial begrenzten Wellenabschnitt im Kupplungsbereich vorgesehen, welcher das Dämpfungsteil aufnehmende Axialabschnitt eine axiale Länge aufweist, die geringer ist als die axiale Länge des gesamten Kupplungsbereiches.

Das Dämpfungsteil sperrt in einer weiter bevorzugten Ausgestaltung in Umfangsrichtung abschnittsweise einen Spalt zwischen der An- und Abtriebswelle, liegt entsprechend als dämpfendes Übertragungsmittel zwischen der radialen Außenseite der einen Welle und der dieser zugewandten Innenseite der anderen Welle in dem Spalt ein. Eine Relativverlagerung der Wellen zueinander in Drehrichtung ist durch das den Spalt sperrende Dichtungsteil in Abhängigkeit vom Lastzustand, weiter zumindest bezogen auf einen Lastzustand, für den das Dichtteil ausgelegt ist, maßlich begrenzt. Die Drehmitnahme von der Antriebswelle auf die Abtriebswelle ist in der ersten Stufe bevorzugt allein erreicht über das zwischengeschaltete Dämpfungsteil.

Die erste Stufe und die zweite Stufe sind weiter bevorzugt mit Bezug auf die axiale Länge der Kupplung in axial unterschiedlichen Kupplungsbereichen vorgesehen, so dass entsprechend diese Stufen in axial unterschiedlichen Bereichen der An- und / oder Abtriebswelle zur Wirkung kommen. Bevorzugt sind weiter diese, die beiden Stufen ausformenden Bereiche axial nebeneinander angeordnet, weiter bevorzugt derart, dass eine erste, durch das Dämpfungsteil geformte Stufe in Axialrichtung der Welle betrachtet beidseitig flankiert ist von, jeweils eine zweite oder höhere Stufe ausformenden Wellenbereichen, weiter bevorzugt in Form von Strukturflächen der Wellen. Wirken die An- und Abtriebswelle in der ersten Stufe bevorzugt kraftschlüssig, ggf. in Übergang zur zweiten Stufe formschlüssig, so wirken die An- und Abtriebswelle in der zweiten Stufe, ggf. in jeder weiteren, der ersten Stufe nachgeschalteten Stufe rein formschlüssig zusammen, so weiter bevorzugt durch unmittelbare, formschlüssige Anlage von Wellenabschnitten unter Überlaufen der ersten Stufe.

Das Dämpfungsteil liegt in einer Ausgestaltung des Erfindungsgegenstandes über den Umfang nur teilweise an der zugeordneten Kontur der An- und / oder Abtriebswelle an, so weiter bspw. bei einer im Querschnitt der Welle betrachteten sternförmigen Kontur im Bereich der nach radial außen vorstehenden Sternspitzen der radial inneren Welle und / oder an den nach radial innen vorstehenden, den zwischen den Sternspitzen belassenen Tälern der inneren Welle gegenüberliegenden Konvexbereichen der radial äußeren Welle. So ist weiter bevorzugt eine Anordnung und Ausbildung gewählt, bei welcher das Dämpfungsteil in Kupplungsstellung der Wellen lediglich punktuell an der Kontur der radial inneren Welle und der Kontur der radial äußeren Welle anliegt. Es ergibt sich weiter insbesondere im Zusammenhang mit einem sternförmigen Querschnitt der Kupplungspartner eine sehnenartige Erstreckung eines Teilabschnittes des Dämpfungsteiles zwischen zwei in Umfangsrichtung benachbarten Sternspitzen, wobei sich weiter diese Dämpfungsteilsehne radial außen punktuell an der zugeordneten Innenkontur der Außenwelle abstützt.

Es ergibt sich in weiter bevorzugter Ausgestaltung eine Kreisringform des Dämpfungselements im Ausgangszustand, d.h. im unbelasteten, weiter bevorzugt zufolge der elastischen Einstellung entspannten Zustand. Diese Kreisringform ist weiter auch bei Anordnung des Dämpfungsteils an der dieses haltenden An- oder Abtriebswelle gegeben, dies im ungekuppelten Zustand der Wellen. Es ergibt sich entsprechend bei Anordnung eines solchen Dichtungsteils an der radial äußeren Welle, zugeordnet der zentralen Kupplungsöffnung eine kreisringförmige Innenkontur des Dämpfungsteiles. Bei bevorzugter Anordnung des Dämpfungsteiles an dem radial inneren Kupplungspartner formt das im Ausgangszustand entspannte Dämpfungsteil eine kreisringförmige Außenkontur, die weiter bevorzugt partiell radial über die unrunde Querschnittskontur der zugeordneten Welle, insbesondere im Aufnahmebereich des Dämpfungsteiles ragt. Im montierten Zustand oder wie weiter bevorzugt in der Kupplungsstellung ist das Dämpfungsteil von einer Kreisform abweichend gestaltet, dies weiter insbesondere in der Kupplungsstellung zufolge der auf das Dämpfungsteil in Radialrichtung einwirkenden Strukturbereiche der anderen Welle. So ergibt sich bei einer bevorzugten sechseckigen, sternförmigen Querschnittsausgestaltung der Kupplungsabschnitte der Wellen eine im Kupplungszustand hexagonale Form des im Entlastungszustand kreisringförmigen Dämpfungsteiles.

Weiterhin ist bevorzugt das Dämpfungsteil ein O-Ring mit einer Schnurstärke von 1,5 - 5 mm, weiter bevorzugt 2 - 3 mm.

Zufolge der vorbeschriebenen Ausgestaltungen ergibt sich in bevorzugter Ausführungsform eine insgesamt dreistufige Dämpfung, wobei die ersten beiden Stufen unter Einbeziehung des Dämpfungsteils realisiert sind und die dritte Stufe unter Überwindung desselben allein durch Kupplungseingriff der An- und Abtriebswellen erreicht ist. In bevorzugter Ausgestaltung wirkt hierbei die erste Stufe reibschlüssig bis zu einem Drehmoment von 1 - 3 Ncm, weiter bevorzugt 2 Ncm, welches Drehmoment im Leerlaufbetrieb des Rührwerks vorliegt. Im Leerlaufbetrieb ist in dem Rührtopf kein oder kein auf das Rührwerk nennenswert drehmomenteinwirkendes Rührgut aufgenommen. Die zweite Stufe der Dämpfung wirkt bei geringer Last, so weiter in einem Drehmomentbereich ausgehend von der ersten Stufe bis hin zu 35 - 70 Ncm, in welcher zweiten Stufe das Dämpfungsteil zumindest annähernd formschlüssig wirkt. Die dritte, das Dämpfungsteil überbrückende Stufe, wirkt bei einer, den Maximalwert der zweiten Stufe übersteigenden Last, beispielsweise bei einer Last, die größer ist als 70 Ncm.

Das Dämpfungsteil besteht weiter in bevorzugter Ausgestaltung aus einem Elastomerwerkstoff, beispielsweise aus einem thermoplastischen Elastomer (TPE), Silicon oder Nitrilkautschuk (NBR), weiter bevorzugt im Hinblick auf die Reibbeanspruchung in der ersten Dämpfungsstufe aus Polyurethan (PU).

Eine verbesserte Mittenzentrierung der Wellen bzw. der Kupplungspartner zueinander ist in einer Weiterbildung des Erfindungsgegenstandes erreicht dadurch, dass die An- und Abtriebswellen, vorzugsweise ergänzend, durch betrieblich relativ zueinander feststehende Teile zentriert sind. So ist ein feststehendes Teil gehäuseseitig, d.h. weiter rührtopfaufnahmeseitig vorgesehen, welches mit einem feststehenden Teil des in die Rührtopfaufnahme einzusetzenden Rührtopfes zusammenwirkt. Dies bietet darüber hinaus ein günstigeres Finden der Kupplungsstellung von An- und Abtriebswelle.

In einer bevorzugten Ausgestaltung ist weiter vorgesehen, dass als Zentrierungspartner eine chassisfeste, der Rührwerkaufnahme zugeordnete Hülse und ein rührwerkseitiger, von der Abtriebswelle durchsetzter Ringkörper vorgesehen ist. Entsprechend ist bevorzugt die vorzugsweise ergänzende Zentrierung zwischen den relativ zueinander feststehenden Teilen radial außerhalb des Kupplungsbereiches der Wellen vorgesehen. Eine günstige Handhabung beim Einsetzen des Rührtopfes in die Rührtopfaufnahme ist dadurch erreicht, dass der Ringkörper des Rührtopfes und die chassisfeste Hülse an zugeordneten Ringflächen im Querschnitt kreisförmig ausgebildet sind, weiter bevorzugt mit jeweils einer senkrecht zur Querschnittsebene ausgerichteten Mittenachse, die die jeweilige Wellenachse, d.h. die Achse der Abtriebswelle mit Bezug zu dem Ringkörper bzw. die Welle der Antriebsachse mit Bezug zu der Hülse aufnimmt, so dass der Ringkörper bzw. die Hülse koaxial zu der jeweiligen Wellenachse ausgerichtet ist.

Alternativ oder auch kombinativ zu den vorbeschriebenen Zentrierungspartnern kann eine Zentrierung auch über die drehenden Elemente (Kupplungspartner) erreicht sein.

Die jeweils angegebenen zahlenmäßigen Bandbreiten schließen auch - soweit solche nicht ohnehin exemplarisch angegeben sind - sämtliche Zwischenwerte ein, und zwar insbesondere in 1/10-Schritten von der unteren und / oder oberen Grenze auf die jeweils andere Grenze hin eingeschränkt. "Und" steht hierbei dafür, dass beide Grenzen um jeweils ein oder mehrere Zehntel auf die Grenze hin verschoben, d.h. eingegrenzt werden.

Nachstehend ist die Erfindung anhand der beigefügten Zeichnung, welche lediglich ein Ausführungsbeispiel darstellt, näher erläutert. Es zeigt:
- Fig. 1: in Ansicht eine erfindungsgemäße Küchenmaschine mit einem Rührtopf sowie einem in dem Rührtopf angeordneten, antreibbaren Rührwerk;
- Fig. 2: den Schnitt gemäß der Linie II - II in Fig. 1, in vergrößerter Darstellung;
- Fig. 3: den Schnitt gemäß der Linie III - III in Fig. 2 durch den Kupplungsbereich einer maschinenseitigen Antriebswelle und einer rührtopfseitigen Abtriebswelle, eine erste Belastungssituation darstellend;
- Fig. 4: eine Herausvergrößerung aus Fig. 3, einen Kupplungsabschnitt betreffend;
- Fig. 5: eine Darstellung gemäß Fig. 4, eine Situation bei gegenüber Fig. 4 höherer Belastung betreffend;
- Fig. 6: den Schnitt gemäß der Linie VI - VI in Fig. 5;
- Fig. 7: eine weitere der Figur entsprechende Darstellung, jedoch bei einer gegenüber der Darstellung in Fig. 5 erhöhten Belastung der Kupplung;
- Fig. 8: den Schnitt gemäß der Linie VIII - VIII in Fig. 7;

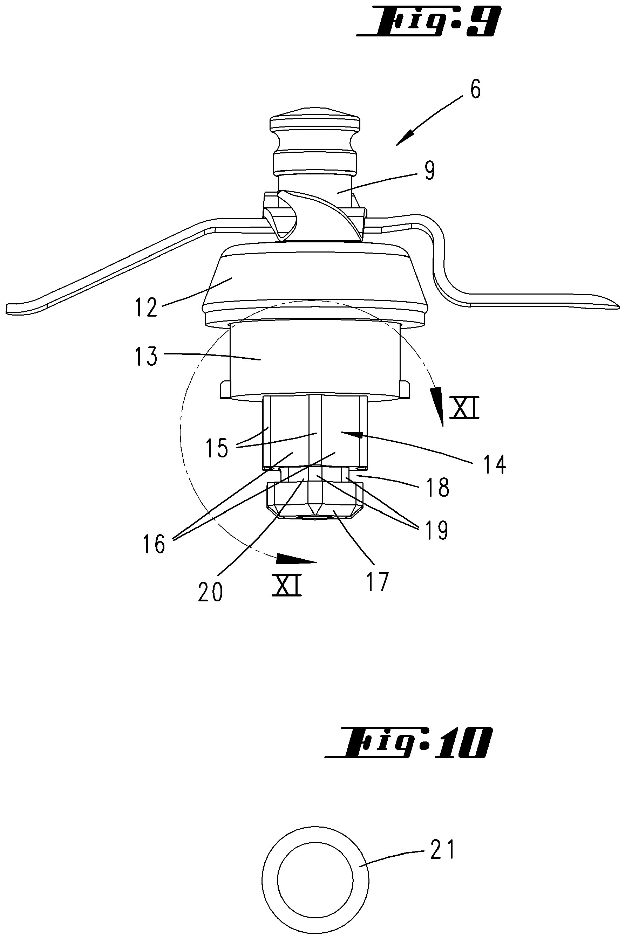

- Fig. 9: das Rührwerk mit der zugeordneten Abtriebswelle in perspektivischer Einzeldarstellung;
- Fig. 10: in Draufsicht ein der Abtriebswelle des Rührwerks zuzuordnendes Dämpfungsteil;
- Fig. 11: die vergrößerte Darstellung des Bereiches XI in Fig. 9 bei an der Abtriebswelle des Rührwerkes angeordnetem Dämpfungsteil;
- Fig. 12: den Schnitt gemäß der Linie XII - XII in Fig. 11.

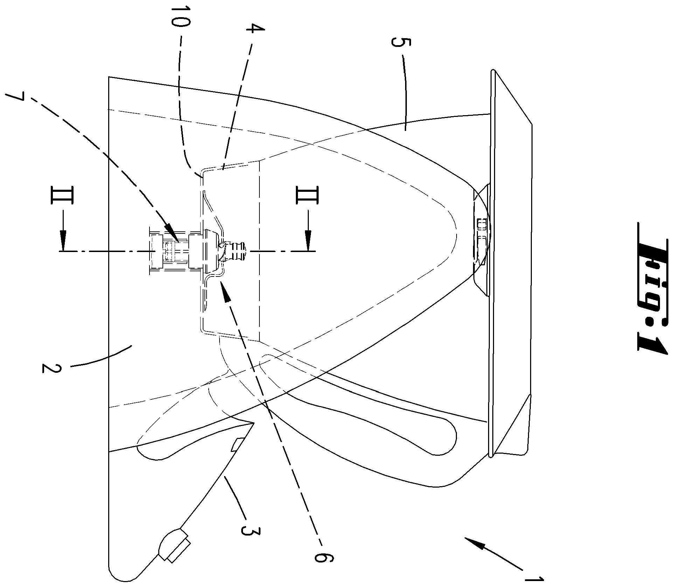

Dargestellt und beschrieben ist zunächst mit Bezug zu Fig. 1 eine Küchenmaschine 1 mit einem Gehäuse 2, welch letzteres ein Bedienfeld 3 aufweist. Dieses Bedienfeld 3 trägt insbesondere einen Drehzahlsteller, weiter ggf. einen Temperaturwähler sowie ein Display.

Des Weiteren weist das Gehäuse 2 eine Rührtopfaufnahme 4 für einen abnehmbaren und ggf. beheizbaren Rührtopf 5 auf. Letzterer ist mit einem Rührwerk 6 in Form eines Messerwerkes versehen, welches über eine Kupplung 7 bei in der Rührtopfaufnahme 4 aufgenommenem Rührtopf 5 mit einem, über den Drehzahlsteller regelbaren, in dem Gehäuse 2 der Küchenmaschine 1 aufgenommenen Elektromotor in Verbindung steht.

Der Topfboden 10 des Rührtopfes 5 ist flach und im Wesentlichen eben ausgebildet, wobei weiter in diesem Topfboden 10 ein Widerstands-Heizelement bspw. in Form einer Dickschichtheizung integriert sein kann.

Die senkrecht zum Topfboden 10 ausgerichtete Rührwerkachse x durchsetzt den Topfboden 10 mittig. Eine Festlegung des Rührwerkes 6 an den Topfboden 10 erfolgt mittels Verspannung.

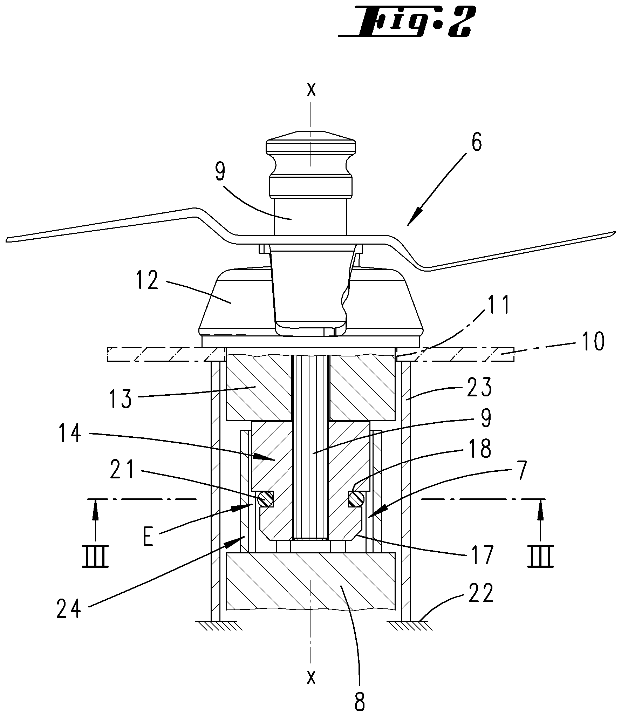

Wie insbesondere aus der Darstellung in Fig. 2 zu erkennen, weist das Rührwerk 6 eine, den Topfboden 10 durchsetzende Abtriebswelle 9 auf. Diese ist drehfest mit den Werkzeugen, hier Messern, des Rührwerkes 6 verbunden.

Die Abtriebswelle 9 ist zunächst im Bereich eines, den Topfboden 10 im Bereich einer entsprechend kreisrunden Öffnung 11 durchsetzenden Festlegungsgehäuse 12 geführt. Mittels letzterem wird die Klemmfestlegung des gesamten Rührwerkes 6 an dem Topfboden 10 erreicht. Der nach unten, d.h. zum Rührwerk 6 abgewandten Seite des Topfbodens 10 hinausragende Abschnitt des Festlegungsgehäuses 12 formt einen im Querschnitt kreisförmigen Ringkörper 13 aus.

Der weiter über den Ringkörper 13 hinausragende Abschnitt der Abtriebswelle 9 ist drehfest mit einem Kupplungsmitnehmer 14 versehen. Dieser kann auch einstückig mit der Abtriebswelle 9 ausgeformt sein.

Dieser Kupplungsmitnehmer 14 ist im Querschnitt, d.h. in einer quer zur Wellenachse bzw. Rührwerksachse x betrachteten Ebene bezüglich der Außenkontur im Wesentlichen sternförmig gestaltet, so weiter über den Umfang betrachtet sechs gleichmäßig zueinander beabstandet angeordnete, verrundete Mitnehmerspitzen 15 aufweisend. Zwischen diesen Mitnehmerspitzen 15 nimmt die Außenkontur des Kupplungsmitnehmers 14 eine konkave Kontur auf, so dass sich zwischen den Mitnehmerspitzen 15 Täler 16 bilden.

In dem dargestellten Ausführungsbeispiel ergibt sich ein Verhältnis des Mitnehmerdurchmessers im Bereich der Mitnehmerspitzen 15 zu den Tälern 16 von etwa 1,5:1.

Die axiale Länge des Kupplungsmitnehmers 14 entspricht etwa dem 1,5-Fachen des maximalen Durchmessers desselben.

In weiterer Ausgestaltung liegt das Höhen- / Breitenverhältnis des Kupplungsmitnehmers zwischen 0,5 und 2, bevorzugt zwischen 1 und 1,5.

Das freie Ende des Kupplungsmitnehmers 14 ist mit einer umlaufenden Phase 17 versehen zur Ausformung einer Einführhilfe.

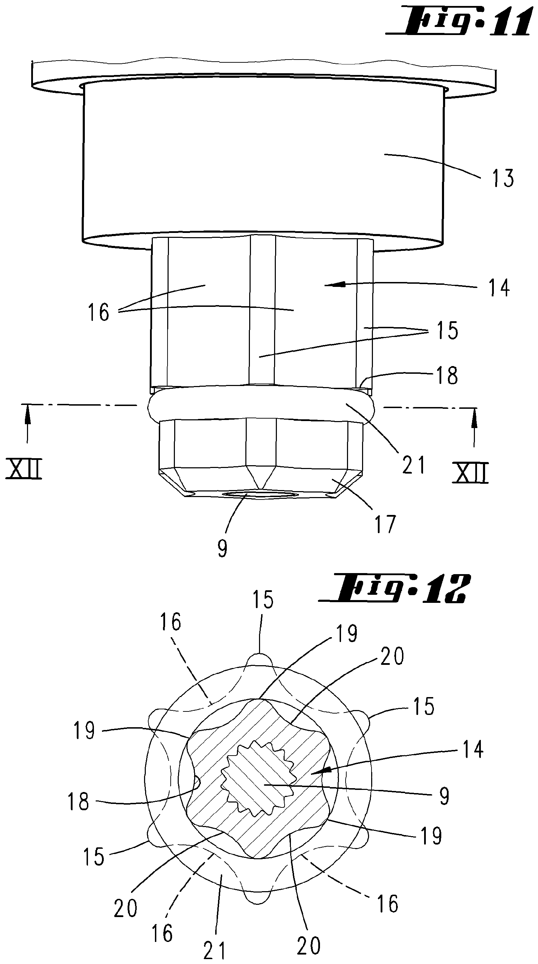

Mit einem Axialabstand von etwa einem Drittel der axialen Länge des Kupplungsmitnehmers 14 zum freien Ende desselben, weist der Kupplungsmitnehmer 14 eine umlaufende Nut 18 auf. Deren Nutgrund ist konturgleich zur Außenkontur des Kupplungsmitnehmers 14 gestaltet, dies bei einer gegenüber der Außenkontur annähernd gleichmäßigen radialen Nuttiefe, welche etwa dem 0,2-Fachen des Durchmessers im Bereich der Mitnehmerspitzen 15 bzw. der Täler 16 entspricht. Zufolge dieser Ausgestaltung ergeben sich im Nutgrund gemäß dem in Fig. 12 dargestellten Querschnitt verrundete Anlagespitzen 19, die in radialer Flucht zu den Mitnehmerspitzen 15 angeordnet sind. Auch zwischen den Anlagespitzen 19 ergeben sich parallel zu den Tälern 16 der Außenkontur konkav verlaufende Nuttäler 20.

Die in axialer Richtung betrachtete Nuthöhe ist angepasst an den Durchmesser eines als O-Ring ausgebildeten Dämpfungsteils 21. Dieses besteht bevorzugt aus einem Gummimaterial oder einem thermoplastischen Elastomer und weist entsprechend der O-Ring-Gestaltung eine kreisringförmige Außenkontur sowie Innenkontur auf, wobei der Innendurchmesser des Dämpfungsteiles 21 angepasst ist an den Außendurchmesser des Kupplungsmitnehmers 14 im Bereich der radial rückversetzten Anlagespitzen 19 innerhalb der Nut 18. Die Schnurstärke und so auch hieraus resultierend der Außendurchmesser des ringförmigen Dämpfungsteiles 21 ist so bemessen, dass im entspannten, d.h. ringförmigen Zustand des Dämpfungsteiles 21, in der Nut 18 einliegend, die Dämpfungsteil-Außenkontur radial rückversetzt ist zu den Mitnehmerspitzen 15 des Kupplungsmitnehmers 14. Entsprechend ist der Außendurchmesser des Dämpfungsteiles 21 kleiner gewählt als der Außendurchmesser des Kupplungsmitnehmers 14 im Bereich der Mitnehmerspitzen 15. In dem dargestellten Ausführungsbeispiel ist eine Schnurstärke des Dämpfungsteiles 21 gewählt, die etwa einem Dreiviertel der radialen Nuttiefe entspricht.

Das Dämpfungsteil 21 liegt entsprechend in der Nut 18 des Kupplungsmitnehmers 14 unverlierbar ein, wenngleich dieses werkzeuglos bspw. zum Austausch desselben entfernbar ist.

In alternativer Ausgestaltung ist die, das Dämpfungsteil 21 aufnehmende Nut 18 mit einem Abstand zum freien Ende des Kupplungsmitnehmers 14 positioniert, welcher Abstand etwa einem Halben bis zwei Drittel der axialen Länge des Kupplungsmitnehmers 14 entspricht. Bevorzugt ist hierbei eine Beabstandung von etwa zwei Drittel der axialen Länge des Kupplungsmitnehmers 14, zufolge dessen der Einsteckweg des Dämpfungsteils 21 beim Kuppeln der Kupplungspartner relativ gering gehalten ist.

Zufolge der vorbeschriebenen Konturierung des Kupplungsmitnehmers 14 sowie dessen Nut 18 und der Abmessung des Dämpfungsteiles 21 ergibt sich in einer unbelasteten Stellung gemäß den Darstellungen in den Figuren 11 und 12 eine entspannte Ausrichtung des Dämpfungsteiles 21, in welcher bei einer Projektion in eine Ebene quer zur Wellenachse die sich zwischen den Anlagespitzen 19 erstreckenden Dämpfungsteil-Abschnitte in die zugeordneten, radial rückversetzten Talbereiche zwischen zwei Mitnehmerspitzen 15 erstrecken. Entsprechend tritt das ringförmige Dämpfungsteil 21 partiell radial aus der Nut 18 aus.

Die Küchenmaschine 1 weist eine, dem Ringkörper 13 des Rührwerkes 6 zuordbare, am Chassis 22 der Maschine 1 festgelegte Hülse 23 auf. Diese erstreckt sich koaxial zu der Rührwerksachse x, mit einem Innendurchmesser, der an den Außendurchmesser des rührwerkseitigen Ringkörpers 13 angepasst ist. Bei Steckzuordnung des Rührtopfes 5 in die Rührtopfaufnahme 4 ist entsprechend durch Einfügen des Ringkörpers 13 des Rührwerkes 6 in die Hülse 23 eine erste Mittenausrichtung erreicht.

Weiter ist in der Küchenmaschine 1 ein über einen Elektromotor drehantreibbares Kupplungsteil 24 vorgesehen. Dieses ist Teil der Antriebswelle 8, die koaxial ausgerichtet ist zu der chassisseitigen Hülse 23.

Das Kupplungsteil 24 ist topfartig gestaltet, zur axialen Steckzuordbarkeit des rührwerkseitigen Kupplungsmitnehmers 14. Die Aufnahmeinnenkontur des Kupplungsteiles 24 ist angepasst an die Außenkontur des Kupplungsmitnehmers 14, d.h. demgegenüber radial erweitert parallel verlaufend, so dass sich eine gegenüber der Außenkontur des Kupplungsmitnehmers 14 negative Innenkontur des Kupplungsteiles 24 ergibt. Hieraus resultieren über den Umfang gleichmäßig verteilt angeordnete, zur Aufnahme der Mitnehmerspitzen 15 des Kupplungsmitnehmers 14 ausgebildete Spitzenaufnahmebereiche 26, die angepasst an die Kontur der Mitnehmerspitzen 15 in ihren Tälern verrundet sind. Zwischen zwei in Umfangsrichtung benachbarten Spitzenaufnahmebereiche 26 wölbt sich die Innenwandung des Kupplungsteiles 24 angepasst an den konkaven Verlauf der Kupplungsmitnehmer-Täler 16 konvex vor.

Die Durchmesser im Bereich der Spitzenaufnahmebereiche 26 bzw. im Bereich der Vorwölbungen 27 sind so gewählt, dass in der Kupplungs-Steckzuordnung, d.h. bei eingesetztem Kupplungsmitnehmer 14 in das Kupplungsteil 24 im Idealfall, d.h. bei exakt zueinander ausgerichteten Wellenachsen sich ein umlaufender Spalt zwischen Kupplungsmitnehmer 14 und der Innenwandung des Kupplungsteiles 24 einstellt, der im Zehntel- bis 1-mm-Bereich liegt.

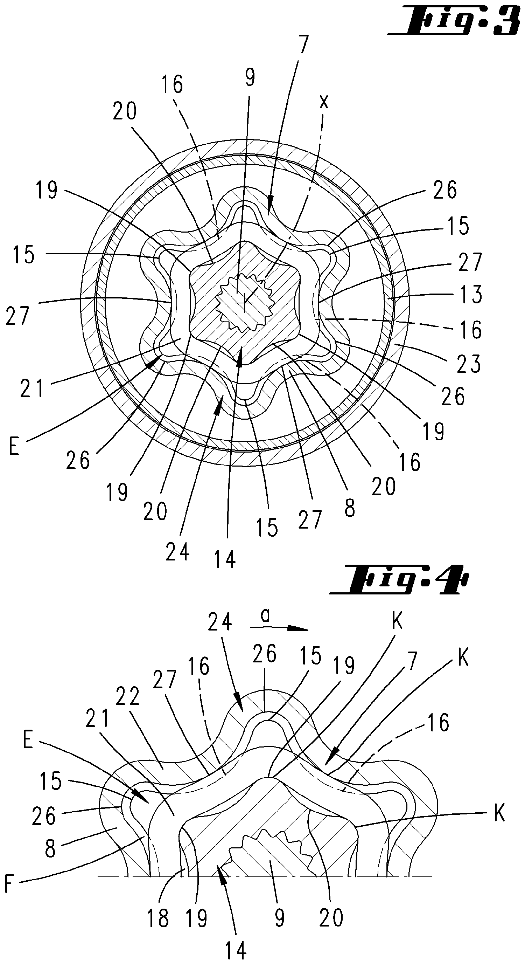

Wie weiter insbesondere aus den Darstellungen in den Figuren 3 und 4 zu erkennen, ist in Steckzuordnung von Kupplungsmitnehmer 14 und Kupplungsteil 24 das Dämpfungsteil 21 von einer Kreisform abweichend gestaltet, dies bedingt durch eine radiale Rückdrängung der sich zwischen den Mitnehmerspitzen 15 erstreckenden Dämpfungsteil-Abschnitte durch die radial von außen auf diese einwirkenden Vorwölbungen 27 des Kupplungsteils 24. Entsprechend erstreckt sich der Abschnitt zwischen zwei Kupplungsmitnehmern 14 sehnenartig freigespannt, womit, mit Bezug auf ein Kupplungssegment eine Drei-Punkt-Anlage des Dämpfungsteiles 21 erreicht ist, nämlich zum einen an den beiden Mitnehmerspitzen 15 in der Nut 18 des Kupplungsmitnehmers 14 und zum weiteren eine punktuelle Anlage im Bereich der kupplungsteilseitigen Vorwölbung 27.

Die nachstehend näher beschriebenen Dämpfungsverhalten beziehen sich in den dargestellten Ausführungsformen auf eine Drehrichtung a, sind jedoch in gleicher Weise auch für eine entgegengesetzte Drehrichtung gültig.

Das Dämpfungsteil 21 stellt eine erste Stufe einer Dämpfungseinrichtung E dar, die den niedrigen und mittleren Lastbereich abdeckt.

Diese in den Figuren 3 und 4 dargestellte Ausrichtung des Dämpfungsteiles 21 entspricht dem Ruhezustand, d.h. bei nicht drehangetriebener Kupplung 7. Weiter ist durch diese punktuelle Anlage (Punkte K in Fig. 4) des Dämpfungsteiles 21 auch eine Drehübertragung von Kupplungsteil 24 auf den Kupplungsmitnehmer 14 bei geringen Lasten - bspw. Belastung über das Rührwerk 6 - ermöglicht. Die Drehübertragung erfolgt über die freigespannte Sehne des Dämpfungsteiles 21, welcher Zustand dem weichesten Dämpfungszustand bei größtmöglichem Fehlerausgleich bzgl. eines möglichen Restmittenversatzes entspricht. Über die punktuelle Anlage ist eine kraftschlüssige Übertragung ermöglicht, dies weiter bis zu einem Drehmoment-Grenzwert ohne relative Drehverlagerung von Kupplungsmitnehmer 14 und Kupplungsteil 24 zueinander.

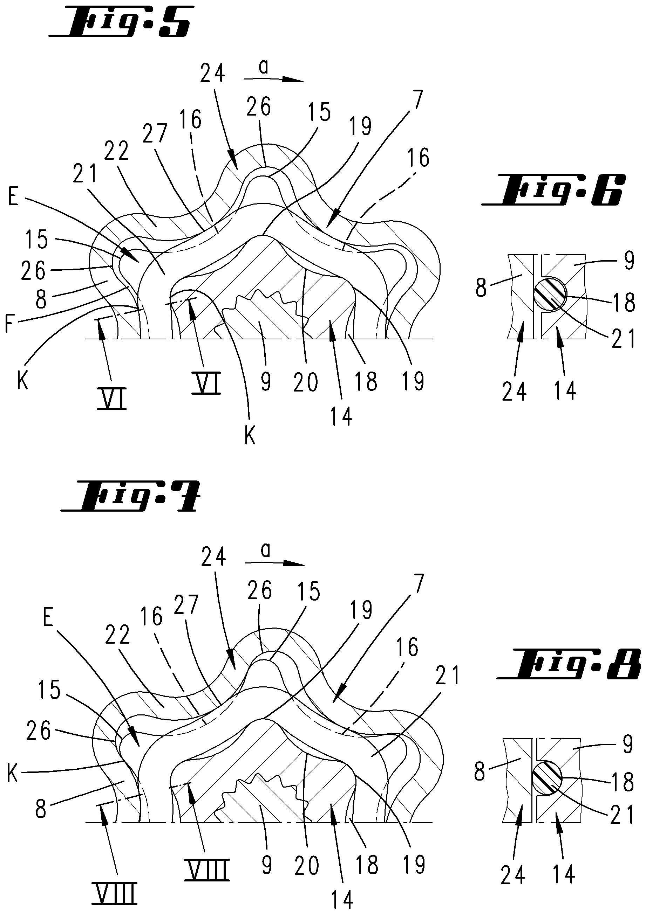

Nach Überschreiten eines Last-Grenzwertes und Erreichen einer auf die Kupplung 7 wirkenden mittleren Last wird der Mitnahmekontakt zwischen den Kupplungspartnern (Kupplungsmitnehmer 14 und Kupplungsteil 24) über die Profilform des Dämpfungsteils 21 erreicht (siehe Punkte K in Fig. 5). Hierbei erfolgt eine, wenngleich geringe, Relativdrehverlagerung von Kupplungsteil 24 und Kupplungsmitnehmer 14, so dass es zu einer Sperrung des zwischen den zugeordneten Flanken von Spitzenaufnahmebereich 24 und Mitnehmerspitze 15 in der unbelasteten Stellung belassenen Freiraumes F durch das Dämpfungsteil 21 kommt, ohne dass diese Flanken in Anlage treten. Die mittlere Last entspricht hierbei dem Dämpfungswert des Dämpfungsteils 21, so dass dieses gemäß der Darstellung in Fig. 6 unkomprimiert seine vorgegebene kreisrunde Form beibehält.

Es ist annähernd eine formschlüssige Zusammenwirkung von Antriebswelle 8 und Abtriebswelle 9 erreicht, dies zwischen den Mitnehmerspitzen 15 und einer zugewandten Flanke des zugeordneten Spitzenaufnahmebereiches 26 unter Zwischenschaltung des Dämpfungsteiles 21.

Die zweite Stufe der Dämpfungseinrichtung E ist erreicht bei hohen Lasten, bei welchen unter geringer Komprimierung des Dämpfungsteilquerschnittes gemäß Fig. 8 die zugewandten Flanken von Mitnehmerspitzen 15 und Spitzenaufnahmebereiche 26 unmittelbar in Anlage treten (siehe Punkt K in Fig. 7). Durch entsprechende Materialwahl der Kupplungspartner, weiter insbesondere der Mitnehmerspitzen 15 und Spitzenaufnahmebereiche 26 ist die zweite Stufe entsprechend steifer bzw. härter ausgelegt als die erste Dämpfungsstufe, die durch das komprimierfähige Dämpfungsteil 21 gebildet ist. Die Kupplungsmitnehmer 14 und das Kupplungsteil 24, sowie entsprechend die Mitnehmerspitzen 15 und die Spitzenaufnahmebereiche 26 sind aus einem, die Kräfte im Hochlastbereich übertragenden Werkstoff gefertigt, beispielsweise aus einem entsprechend ausgelegten Hartkunststoff oder aus einem Metallwerkstoff.

Die Mittenzentrierung der Kupplung zwischen Rührwerk 6 und Antriebswelle 8 ist zufolge der vorbeschriebenen Lösung zunächst erreicht durch die gesonderten Zentrierelemente an den nicht rotierenden Teilen (Ringkörper 13 und Hülse 23), womit ein möglichst kleiner, nicht rotierender Mittenversatz ermöglicht ist. Der ggf. verbleibende Restmittenversatz ist durch eine differenziert wirkende Dämpfungseinrichtung E ausgeglichen, welches auf den Betriebszustand mit geringer Last ausgelegt ist und bei hohen Betriebslasten keiner Schädigung ausgesetzt ist.

Das Dämpfungsteil 21 ist in Form eines elastischen Ringes in einer speziell geformten Nut 18 der radial wirkenden Antriebsverzahnung so eingelegt, dass die freie Beweglichkeit in Form einer gespannten Sehne möglich ist. Die speziell geformte Nut 18 ist hierbei so ausgelegt, dass sie in Abhängigkeit des Verdrehwinkels der Kupplungspartner (Kupplungsmitnehmer 14 und Kupplungsteil 24) unterschiedliche Freiräume für das Dämpfungsprofil anbietet. Die Freiräume F sind weiter so ausgestattet, dass in einem ersten lastarmen Zustand der Kontakt zum Kupplungspartner über den freigespannten Anteil des Dämpfungsteiles 21 erfolgt. So ist die Kraftübertragung nur über die gespannte Sehne, nicht aber über Pressung des ringförmigen Dämpfungsteils 21 erreicht. Weiter sind die Freiräume F so ausgebildet, dass in einem zweiten Zustand mittlerer Last der Kontakt zum Kupplungspartner über die Profilform des Dämpfungsteiles 21 erfolgt. Zudem sind die Freiräume F so ausgestattet, dass in einem dritten Zustand höchster Last der Kontakt zum Kupplungspartner über die radiale, harte Kupplungsverzahnung zwischen Mitnehmerspitzen 15 und Spitzenaufnahmebereiche 26 direkt übertragen wird. Zufolge der differenzierten Wirkungsweise der Dämpfungseinrichtung E ist in selbst organisierter Art und Weise die Dämpfungshärte dem jeweiligen Lastzustand angepasst.

Durch die Ermöglichung des Überlaufens der ersten, durch das Dämpfungsteil 21 gebildeten Dämpfungsstufe durch unmittelbares, hartes Anlegen der Kupplungspartner aneinander wird das Dämpfungsteil 21 nicht maximal belastet, womit das Dichtungsteil 21 nicht einem unnötig hohen Verschleiß ausgesetzt ist. Vielmehr kann dieses angepasst an eine geringe Belastung eingestellt werden, was weiter zu verbesserten Dämpfungseigenschaften in der ersten Stufe führt.

### Bezugszeichenliste

- 1: Küchenmaschine
- 2: Gehäuse
- 3: Bedienfeld
- 4: Rührtopfaufnahme
- 5: Rührtopf
- 6: Rührwerk
- 7: Kupplung
- 8: Antriebswelle
- 9: Abtriebswelle
- 10: Topfboden
- 11: Öffnung
- 12: Festlegungsgehäuse
- 13: Ringkörper
- 14: Kupplungsmitnehmer
- 15: Mitnehmerspitzen
- 16: Täler
- 17: Phase
- 18: Nut
- 19: Anlagespitze
- 20: Nuttäler
- 21: Dämpfungsteil
- 22: Chassis
- 23: Hülse
- 24: Kupplungsteil
- 25: ---
- 26: Spitzenaufnahmebereiche
- 27: Vorwölbungen
- x: Rührwerkachse

- E: Dämpfungseinrichtung
- F: Freiraum
- K: Punkte

## Patentansprüche

1. Elektromotorisch betriebene Küchenmaschine (1) mit einem Rührtopf (5) und einem darin angeordneten, eine Abtriebswelle (9) aufweisenden Rührwerk (6), wobei die Abtriebswelle (9) im Zuge des Einsetzens des Rührtopfes (5) mit einer, einer Rührtopfaufnahme (4) zugeordneten Antriebswelle (8) kuppelt, wobei die Kupplung (7) durch eine im Querschnitt unrunde Ausbildung der zugeordneten Abschnitte der An- und Abtriebswelle (8, 9) gebildet ist, **dadurch gekennzeichnet, dass** die An- und/oder Abtriebswelle (8, 9) im Kupplungsbereich eine in Umfangsrichtung mindestens zweistufig wirkende Dämpfungseinrichtung (E) aufweist, wobei die zweite, nach Überschreiten eines bestimmten Drehmoments in Wirkung kommende Stufe steifer ausgelegt ist als die vorgeschaltete erste Stufe, und dass die erste Stufe durch Anordnung einer Weichzone gebildet ist und dass die zweite Stufe durch unmittelbare Anlage von miteinander wirkenden Strukturabschnitten der An- und Abtriebswelle gebildet ist, wobei die erste Stufe durch ein Überlaufen der ersten Stufe durch unmittelbares hartes Anlegen der Kupplungspartner aneinander nicht maximal belastet ist.

2. Küchenmaschine nach Anspruch 1, **dadurch gekennzeichnet, dass** über die Dämpfungseinrichtung (E) nur Kräfte in Umfangsrichtung übertragen werden.

3. Küchenmaschine nach einem der vorhergehenden Ansprüche, **dadurch gekennzeichnet, dass** zumindest die erste Stufe der Dämpfungseinrichtung (E) durch ein von der An- oder Abtriebswelle (8, 9) lösbares Dämpfungsteil (21) gebildet ist.

4. Küchenmaschine nach Anspruch 3, **dadurch gekennzeichnet, dass** das Dämpfungsteil (21) in eine Fläche der An- oder Abtriebswelle (8, 9) einsetzbar ist.

5. Küchenmaschine nach einem der Ansprüche 3 oder 4, **dadurch gekennzeichnet, dass** das Dämpfungsteil (21) die An- oder Abtriebswelle (8, 9) ringartig umgibt oder ausfüllt.

6. Küchenmaschine nach einem der Ansprüche 3 bis 5, **dadurch gekennzeichnet, dass** das Dämpfungsteil (21) in Umfangsrichtung abschnittsweise einen Spalt zwischen der An- und Abtriebswelle (8, 9) sperrt.

7. Küchenmaschine nach einem der vorhergehenden Ansprüche, **dadurch gekennzeichnet, dass** die erste Stufe und die zweite Stufe in axial unterschiedlichen Bereichen der An- und/oder Abtriebswelle zur Wirkung kommen.

8. Küchenmaschine nach einem der vorhergehenden Ansprüche, **dadurch gekennzeichnet, dass** jedenfalls in der zweiten Stufe die An- und Abtriebswelle (8, 9) formschlüssig zusammenwirken.

9. Küchenmaschine nach einem der Ansprüche 3 bis 8, **dadurch gekennzeichnet, dass** das Dämpfungsteil (21) über den Umfang nur teilweise an der zugeordneten Kontur der An- und/oder Abtriebswelle (8, 9) anliegt.

10. Küchenmaschine nach einem der Ansprüche 3 bis 9, **dadurch gekennzeichnet, dass** das Dämpfungsteil (21) im Ausgangszustand kreisringförmig ist, jedoch im montierten Zustand oder in der Kupplungsstellung von einer Kreisform abweichend gestaltet ist.

11. Küchenmaschine nach einem der Ansprüche 3 bis 10, **dadurch gekennzeichnet, dass** das Dämpfungsteil (21) ein O-Ring ist.

12. Küchenmaschine nach einem der vorhergehenden Ansprüche, **dadurch gekennzeichnet, dass** die An- und Abtriebswelle (8, 9), vorzugsweise ergänzend, durch betrieblich relativ zueinander feststehende Teile zentriert sind.

13. Küchenmaschine nach Anspruch 12, **dadurch gekennzeichnet, dass** als Zentrierungspartner eine chassisfeste Hülse (23) und ein rührwerkseitiger, von der Abtriebswelle (9) durchsetzter Ringkörper (13) vorgesehen ist.

14. Küchenmaschine nach Anspruch 13, **dadurch gekennzeichnet, dass** der Ringkörper (13) und die Hülse (23) an zugeordneten Ringflächen im Querschnitt kreisförmig ausgebildet sind.

## Claims

1. Electromotively operated kitchen appliance (1) comprising a mixing bowl (5) and a mixer (6) that is arranged therein and has an output shaft (9), the output shaft (9) coupling to an input shaft (8), which is associated with a mixing bowl receptacle (4), when the mixing bowl (5) is being inserted, the coupling (7) being formed of a non-circular cross section of the associated portions of the input and output shafts (8, 9), **characterised in that** the input and/or output shaft (8, 9) comprises, in the coupling region, a damping device (E) that operates at least in two stages in the peripheral direction, the second stage, which comes into effect after a specific torque is exceeded, being designed to be more rigid than the upstream first stage, and **in that** the first stage is formed by the arrangement of a soft zone and **in that** the second stage is formed by the direct contact of interacting structural portions of the input and output shafts, the first stage not being maximally loaded by the first stage overflowing due to direct hard contact of the coupling partners to one another.

2. Kitchen appliance according to claim 1, **characterised in that** only forces are transmitted in the peripheral direction by the damping device (E).

3. Kitchen appliance according to either of the preceding claims, **characterised in that** at least the first stage of the damping device (E) is formed of a damping part (21) that can be detached from the input or output shaft (8, 9).

4. Kitchen appliance according to claim 3, **characterised in that** the damping part (21) can be inserted into a surface of the input or output shaft (8, 9).

5. Kitchen appliance according to either claim 3 or claim 4, **characterised in that** the damping part (21) surrounds or fills the input or output shaft (8, 9) in an annular manner.

6. Kitchen appliance according to any of claims 3 to 5, **characterised in that** the damping part (21) blocks a gap between the input and output shafts (8, 9) in portions in the peripheral direction.

7. Kitchen appliance according to any of the preceding claims, **characterised in that** the first stage and the second stage operate in axially different regions of the input and/or output shaft.

8. Kitchen appliance according to any of the preceding claims, **characterised in that** in the second stage at least, the input and output shafts (8, 9) interact in an interlocking manner.

9. Kitchen appliance according to any of claims 3 to 8, **characterised in that** the damping part (21) abuts the associated contour of the input and/or output shaft (8, 9) only in part over the periphery.

10. Kitchen appliance according to any of claims 3 to 9, **characterised in that** the damping part (21) is annular in the initial state; however, when assembled or in the coupling position, it has a shape other than circular.

11. Kitchen appliance according to any of claims 3 to 10, **characterised in that** the damping part (21) is an O-ring.

12. Kitchen appliance according to any of the preceding claims, **characterised in that** the input and output shafts (8, 9) are, preferably additionally, centred by means of parts that are operationally fixed relative to one another.

13. Kitchen appliance according to claim 12, **characterised in that** a sleeve (23) fixed to the chassis and an annular body (13) on the mixer side that is penetrated by the output shaft (9) are provided as centring partners.

14. Kitchen appliance according to claim 13, **characterised in that** the annular body (13) and the sleeve (23) have an annular cross section on associated annular surfaces.

## Revendications

1. Appareil de cuisine (1) à entraînement par moteur électrique, ayant un récipient de mélange (5) et, agencé dans celui-ci, un agitateur (6) présentant un arbre entraîné (9), dans lequel l'arbre entraîné (9), lors de l'insertion du récipient de mélange (5), s'accouple avec un arbre d'entraînement (8) associé à une structure d'accueil du récipient de mélange (4), dans lequel l'accouplement (7) est formé par une formation non circulaire en coupe transversale des tronçons associés des arbres d'entraînement et entraîné (8, 9), **caractérisé en ce que** l'arbre d'entraînement et/ou entraîné (8, 9) présente dans la zone d'accouplement un dispositif d'amortissement (E) agissant au moins suivant deux étages dans la direction circonférentielle, dans lequel le deuxième étage entrant en action après le dépassement d'un couple déterminé est conçu plus rigide que le premier étage en amont, et **en ce que** le premier étage est formé par l'agencement d'une zone souple et **en ce que** le deuxième étage est formé par engagement direct de tronçons structurels des arbres d'entraînement et entraîné qui interagissent ensemble, dans lequel le premier étage n'est pas chargé au maximum par un dépassement du premier étage par engagement dur direct des partenaires d'accouplement entre eux.

2. Appareil de cuisine selon la revendication 1, **caractérisé en ce que** des efforts sont transmis uniquement dans la direction circonférentielle via le dispositif d'amortissement (E).

3. Appareil de cuisine selon l'une des revendications précédentes, **caractérisé en ce qu'**au moins le premier étage du dispositif d'amortissement (E) est formé par une partie d'amortissement amovible (21) de l'arbre d'entraînement ou entraîné (8, 9).

4. Appareil de cuisine selon la revendication 3, **caractérisé en ce que** la partie d'amortissement (21) est insérable dans une surface de l'arbre d'entraînement ou entraîné (8, 9).

5. Appareil de cuisine selon l'une des revendications 3 ou 4, **caractérisé en ce que** la partie d'amortissement (21) entoure ou complète l'arbre d'entraînement ou entraîné (8, 9) de manière annulaire.

6. Appareil de cuisine selon l'une des revendications 3 à 5, **caractérisé en ce que** la partie d'amortissement (21), dans la direction circonférentielle, comble par sections un espace entre les arbres d'entraînement et entraîné (8, 9) .

7. Appareil de cuisine selon l'une des revendications précédentes, **caractérisé en ce que** le premier étage et le second étage entrent en action dans des zones axialement différentes de l'arbre d'entraînement et/ou entraîné.

8. Appareil de cuisine selon l'une des revendications précédentes, **caractérisé en ce que**, au moins dans le deuxième étage, les arbres d'entraînement et entraîné (8, 9) coopèrent par verrouillage de forme.

9. Appareil de cuisine selon l'une des revendications 3 à 8, **caractérisé en ce que** la partie d'amortissement (21) ne repose par la périphérie que partiellement contre le contour associé de l'arbre d'entrée et/ou entraîné (8, 9).

10. Appareil de cuisine selon l'une des revendications 3 à 9, **caractérisé en ce que** la partie d'amortissement (21) est de forme annulaire à l'état initial, mais est conçue pour s'écarter d'une forme circulaire dans l'état monté ou dans la situation d'accouplement.

11. Appareil de cuisine selon l'une des revendications 3 à 10, **caractérisé en ce que** la partie d'amortissement (21) est un joint torique.

12. Appareil de cuisine selon l'une des revendications précédentes, **caractérisé en ce que** les arbres d'entraînement et entraîné (8, 9) sont centrés par des pièces fixes l'une par rapport à l'autre en opération, préférentiellement en étant complémentaires.

13. Appareil de cuisine selon la revendication 12, caractérisé en ce sont prévus comme partenaires de centrage, un manchon (23) fixé sur le châssis et un corps annulaire (13) côté agitateur qui est traversé par l'arbre entraîné (9).

14. Appareil selon la revendication 13, **caractérisé en ce que** le corps annulaire (13) et le manchon (23) ont une section transversale circulaire au niveau de surfaces annulaires associées.
